# EUROPÄISCHE PATENTSCHRIFT

(11) **EP 1 862 362 B1**
(45) Veröffentlichungstag und Bekanntmachung des Hinweises auf die Patenterteilung: **16.06.2010**
(21) Anmeldenummer: 07007162.6
(22) Anmeldetag: 05.04.2007
(51) Int. Cl.: B60S 1/48

(54) **Scheibenwaschanlage in einem Kraftfahrzeug**
Windscreen washer in a motor vehicle
Système de lave-glace dans un véhicule automobile

(30) Priorität: 06.04.2006 DE 102006016164
(43) Veröffentlichungstag der Anmeldung: 05.12.2007
(73) Patentinhaber: GM Global Technology Operations, Inc., Detroit, MI 48265-3000 (US)
(72) Erfinder: Barth, Armin, 55237 Lonsheim (DE)
(74) Vertreter: Daniel, Ulrich W.P.

(56) Entgegenhaltungen:
- EP-A- 1 006 030
- DE-A1- 19 951 911
- GB-A- 2 330 922
- JP-A- 61 018 543
- US-B1- 6 709 240

## Beschreibung

Die Erfindung bezieht sich auf eine Scheibenwaschanlage in einem Kraftfahrzeug mit einem Vorratsbehälter für eine Waschflüssigkeit, einer Förderpumpe, einem motorisch antreibbaren Scheibenwischer und einer Steuereinrichtung, wobei über ein Bedienelement ein Wischwaschvorgang ausführbar ist.

Kraftfahrzeuge sind zumindest an der Frontscheibe und häufig an der Heckscheibe und den Scheinwerfergläsern mit einer Scheibenwaschanlage ausgestattet, um die Scheiben für eine klare Sicht bzw. für eine optimale Lichtausbeute eines Scheinwerfers sauber zu halten. Die Scheiben werden mittels eines elektromotorisch angetriebenen Scheibenwischers von Verschmutzungen sowie von auftreffendem Regen- bzw. Spritzwasser geräumt.

Zur Verbesserung der Reinigungsfunktion, beispielsweise um trockenen Schmutz, wie Blütenstaub, zu entfernen, verfügt die Scheibenwaschanlage über einen Vorratsbehälter für eine Waschflüssigkeit, die mittels einer Förderpumpe über ein Leitungssystem Düsen zugeführt wird, die entweder am Scheibenwischer selbst und/oder an der Karosserie des Kraftfahrzeugs angeordnet sind. Die Düsen sind derart ausgerichtet, dass ein Flüssigkeitsstrahl auch bei höheren Fahrzeuggeschwindigkeiten möglichst großflächig über die zu reinigende Scheibe verteilt wird, um diese im Wesentlichen vollständig zu benetzen, wodurch Schmutz und Wasser bestmöglichst geräumt werden können. Selbstverständlich können der Vorratsbehälter bzw. das Leitungssystem und/oder die Düsen beheizbar ausgeführt sein, um ein Einfrieren zu verhindern. Als Waschflüssigkeit wird in der Regel Wasser mit einem Waschmittel verwendet.

Weiterhin ist es bekannt, über ein Bedienelement am Armaturenbrett des Kraftfahrzeugs einen so genannten Wischwaschvorgang der Scheibenwaschanlage auszulösen. Wird beispielsweise ein Lenkstockhebel zur Steuerung der Scheibenwaschanlage in axialer Richtung gedrückt, dann wird von einer Steuereinrichtung, die auch in ein zentrales Steuergerät des Kraftfahrzeugs integriert sein kann, eine festgelegte Menge an Waschflüssigkeit über die Förderpumpe gefördert und der Scheibenwischer z.B. drei oder vier Mal hin- und herbewegt. Hierbei ist es auch möglich, die Waschflüssigkeit durch die Förderpumpe solange zu fördern, wie das Bedienelement vom Fahrer des Kraftfahrzeugs betätigt wird und nachfolgend noch einige Wischzyklen des Scheibenwischers auszuführen.

Aus der DE 199 51 911 A1 ist ein Verfahren zum Steuern eines Scheibenwischers und einer in den Wischbereich des Scheibenwischers sprühenden Scheibenwaschanlage bekannt, bei dem zum Reinigen der Scheibe gleichzeitig die Scheibenwaschanlage und der Scheibenwischer aktiviert werden. Damit eine Verschlechterung der Sichtverhältnisse durch den anlaufenden Scheibenwischer vermieden ist, wird vor dem Aktivieren des Scheibenwischers automatisch geprüft, ob die Scheibenwaschanlage in der Lage ist, Reinigungsflüssigkeit zu versprühen.

Die EP 1 006 030 A2 beschreibt eine Scheibenreinigungsanlage für ein Kraftfahrzeug, bei der an dem Vorratsbehälter ein Füllstandssensor angeordnet ist, um ein vollständiges Entleeren des Vorratsbehälters zu vermeiden. Hierzu ist jedoch ein zusätzlicher Sensor mit der notwendigen elektronischen Steuerung notwendig.

Im Weiteren offenbart die DE 37 30 006 C2 eine Flüssigkeitspumpe, insbesondere für eine Scheibenwaschanlage eines Kraftfahrzeugs, die über einen Füllstandssensor, der einen ausreichenden Vorrat an Waschflüssigkeit überwacht, ansteuerbar ist. Hierzu ist ebenfalls die Anordnung eines zusätzlichen Sensors erforderlich.

Darüber hinaus zeigt die DE 198 58 635 A1 eine Scheibenwaschanlage für ein Kraftfahrzeug, die über eine Sammelvorrichtung für Regenwasser verfügt. Eine Füllstandserfassung des Vorratsbehälters erfolgt ebenfalls über einen zusätzlichen Sensor.

Die bekannten Scheibenwaschanlagen sind insofern nachteilig, als bei einem leeren Vorratsbehälter das Anfordern eines Wischwaschvorgangs durch den Nutzer des Kraftfahrzeugs dazu führt, dass sich zwar die Scheibenwischer hin- und herbewegen, jedoch keine Waschflüssigkeit mehr gefördert wird. Dies kann im Extremfall dazu führen, dass Schmutz auf einer Frontscheibe des Kraftfahrzeugs durch die Scheibenwischer verschmiert und durch diese Sichtbeeinträchtigung eine verkehrsgefährdende Situation hervorgerufen wird.

Es ist Aufgabe der Erfindung, eine Scheibenwaschanlage der eingangs genannten Art zu schaffen, bei der ein Verschmieren der Scheibe bzw. eines Scheinwerferglases des Kraftfahrzeugs wegen mangelnder Waschflüssigkeit zuverlässig vermieden ist.

Erfindungsgemäß wir die Aufgabe dadurch gelöst, dass der Wischwaschvorgang bei einer Änderung mindestens eines elektrischen Antriebsparameters der Förderpumpe abschaltbar ist.

Aufgrund dieser Maßnahme wird ein Verschmieren der Scheibe bzw. eines Scheinwerferglases des Kraftfahrzeugs wegen einer nicht ausreichenden Menge an Waschflüssigkeit in dem Vorratsbehälter oder einer unzulässigen Konsistenz des Waschwassers zuverlässig vermieden, da solche Änderungen der Waschflüssigkeit mit einer Änderung eines elektrischen Antriebsparameters der Förderpumpe verbunden sind. Hierunter fallen u.a. die Leistungsaufnahme, beziehungsweise die Versorgungsspannung und/oder die Stromstärke, eine Phasenlage bei einem Drehstrommotor, ein Drehzahlsignal oder ein Signal eines vom Antriebsmotor erzeugten Drehmomentes. Selbstverständlich erhöht sich bei einem leeren Vorratsbehälter beispielsweise die Drehzahl der Förderpumpe. Dies kann sensorisch erfasst und von einem Steuergerät verarbeitet werden.

In Ausgestaltung überwacht die Steuereinrichtung eine Leistungsaufnahme der Förderpumpe und beendet den Wischwaschvorgang bei einer einem Leerlauf entsprechenden Leistungsaufnahme. Die üblicherweise elektromotorisch angetriebene Förderpumpe der Scheibenwaschanlage verfügt im Normalbetrieb, d.h. bei ausreichender Waschflüssigkeit im Vorratsbehälter, über eine im Wesentlichen konstante Leistungsaufnahme. Diese Leistungsaufnahme kann beispielsweise mittels der von der Förderpumpe abgenommenen Stromstärke, der Drehzahl der Förderpumpe und/oder des erzeugten Drehmoments des Antriebsmotors erfasst und in an sich bekannter Weise überwacht werden. Ist jedoch in dem Vorratsbehälter keine Waschflüssigkeit mehr vorhanden, so ändert sich die Leistungsaufnahme der Förderpumpe, da sie leer läuft. Unter anderem benötigt die Förderpumpe in einem solchen Fall eine geringere Stromstärke zur Aufrechterhaltung der Drehzahl und/oder die Drehzahl der Förderpumpe erhöht sich. Dies kann in einfacher Weise überwacht und erfasst werden und ein entsprechendes Signal an die Steuereinrichtung der Scheibenwaschanlage bzw. an ein zentrales Steuergerät im Kraftfahrzeug weitergeleitet werden. Wird eine solche Änderung der Leistungsaufnahme der Förderpumpe festgestellt, kann darauf geschlossen werden, dass die Waschflüssigkeit im Vorratsbehälter aufgebraucht ist. Dementsprechend wird ein Wischwaschvorgang, der von einem Nutzer des Kraftfahrzeugs beispielsweise durch Drücken eines Lenkstockhebels ausgelöst worden ist, abgebrochen. Somit wird ein Scheibenwischer nicht über die Scheibe ohne zusätzliche Waschflüssigkeit hin und her bewegt und ein Verschmieren der Scheibe durch Schmutz oder Ähnlichem ist vermieden. Eine entsprechende hard- und oder softwaremäßige Auslegung der Steuereinrichtung bzw. des Steuergerätes kann vom Fachmann ohne wesentlichen Aufwand durchgeführt werden.

Eine derartige Scheibenwaschanlage ist vorzugsweise an einer Front- und/oder Heckscheibe eines Kraftfahrzeugs vorgesehen. Selbstverständlich kann sie auch zur Reinigung eines Scheinwerferglases oder zur Reinigung sonstiger beliebiger Flächen dienen.

Der Vorteil der Erfindung besteht darin, dass kein zusätzlicher Sensor zur Überwachung eines Füllstandes der Waschflüssigkeit im Vorratsbehälter notwendig ist, da ein bereits vorhandenes elektrisches Signal zur Überwachung des Füllstands herangezogen wird. Sonach ist der Aufwand zur Herstellung der Scheibenwaschanlage verringert und die Fehleranfälligkeit reduziert. Selbstverständlich kann ein Wischwaschvorgang auch dann abgebrochen oder unterbrochen werden, wenn die Förderpumpe nur kurzzeitig Luft zieht, z.B. wenn sich die Oberfläche der Waschflüssigkeit aufgrund einer schnellen Kurvenfahrt unter einen Ansaugstutzen im Vorratsbehälter neigt. Bei einer nachfolgenden Geradeausfahrt kann ein unterbrochener Wischwaschvorgang selbsttätig fortgesetzt oder durch die erneute Beaufschlagung des entsprechenden Bedienelementes wiederholt werden.

Vorzugsweise ist die Steuereinrichtung derart ausgelegt, dass im Falle eines leeren Vorratsbehälters ein vom Nutzer angeforderter Wischwaschvorgang vollständig unterdrückt wird, um ein Verschmieren der Scheibe durch den Scheibenwischer zu vermeiden.

Weiterhin kann der Scheibenwaschanlage ein Feuchtigkeits- und/oder Schmutzsensor zugeordnet sein, der mit beliebigen, dem Fachmann bekannten Messprinzipien eine Benetzung und/oder Verschmutzung beispielsweise einer Frontscheibe des Kraftfahrzeugs erfassen kann. Ein entsprechendes Sensorsignal wird der Steuereinrichtung zugeleitet, um einen Wischwaschvorgang, d.h. das Fördern der Waschflüssigkeit sowie das mehrmalige Hin- und Herbewegen des Scheibenwischers, selbsttätig auszulösen.

Zur Erhöhung des Nutzungskomforts bringt die Steuereinrichtung ein Abschalten der Förderpumpe und/oder ein Beenden und/oder Unterdrücken des Wischwaschvorgangs optisch und/oder akustisch zur Anzeige. Dies kann beispielsweise durch das Aufleuchten einer mit einem entsprechenden Symbol versehenden Kontrollleuchte im Armaturenbrett erfolgen und/oder durch die Ausgabe einer entsprechenden Sprachmitteilung oder eines Signaltons. Der Benutzer des Kraftfahrzeugs erhält somit einen Hinweis zum Überprüfen des Füllstandes der Waschflüssigkeit bzw. zum Auffüllen des Vorratsbehälters oder dass die Anlage verstopft ist, wie im Folgenden beschrieben.

Weiterhin führt bevorzugt die Steuereinrichtung den Wischwaschvorgang entsprechend einer geförderten Menge an Waschflüssigkeit aus. Das bedeutet, dass das Hin- und Herbewegen des Scheibenwischers zumindest solange erfolgt, wie Waschflüssigkeit durch die Förderpumpe gefördert wird. Sollte die Waschflüssigkeit während des Wischwaschvorgangs ausgehen, so kann das Hin- und Herbewegen der Scheibenwischer noch für beispielsweise ein oder zwei Zyklen weiterhin ausgeführt werden, um die bereits auf die Scheibe gespritzte Waschflüssigkeit ausreichend zu räumen. In gleicher Weise kann das Hin- und Herbewegen des Scheibenwischers auch erst dann ausgelöst werden, wenn von der Förderpumpe eine ausreichende Menge an Waschflüssigkeit auf die Scheibe gespritzt wurde. Hierbei überwacht die Steuereinrichtung beispielsweise die Leistungsaufnahme der Förderpumpe über die Dauer des Pumpvorgangs.

Sollte im Vorratsbehälter keine Waschflüssigkeit mehr vorhanden sein, so unterdrückt die Steuereinrichtung den Wischwaschvorgang oder bricht diesen ab. Sollte ein Nutzer des Kraftfahrzeugs dennoch das das Ausführen des Wischwaschvorgangs wünschen kann die Steuereinrichtung derart ausgelegt sein, dass beispielsweise durch axiales Drücken des Lenkstockhebels, eine sogenannte Tippsteuerung, lediglich ein einmaliges Hin- und Herbewegen des Scheibenwischers ausgeführt wird, um eventuell vorhandenen Schmutz auf der Scheibe nicht unnötig zu verschmieren. Hierbei ist es auch möglich, dass die Förderpumpe aktiviert wird, auch wenn keine oder nur eine geringe Menge der Waschflüssigkeit gefördert wird.

Prinzipiell kann eine Änderung eines elektrischen Antriebsparameters der Förderpumpe durch eine kurzfristige Verstopfung der Leitungen und/oder der Düsen für die Waschflüssigkeit verursacht werden. Ist z.B. im Winter eine Düse aufgrund tiefer Umgebungstemperaturen vereist so kann die Waschflüssigkeit nicht ausgespritzt werden, der Druck in den Leistungen erhöht sich und die Förderpumpe läuft unter einer höheren Belastung. Dies kann ebenfalls erfasst werden, um einen ausgelösten Wischwaschvorgang zu unterbrechen oder unterdrücken.

Es versteht sich, dass die vorstehend genannten Merkmale nicht nur in der jeweils angegebenen Kombination, sondern auch in anderen Kombinationen verwendbar sind. Der Rahmen der Erfindung ist nur durch die Ansprüche definiert.

## Patentansprüche

1. Scheibenwaschanlage in einem Kraftfahrzeug mit einem Vorratsbehälter für eine Waschflüssigkeit, einer Förderpumpe, einem motorisch antreibbaren Scheibenwischer und einer Steuereinrichtung, wobei über ein Bedienelement ein Wischwaschvorgang ausführbar ist, **dadurch gekennzeichnet, dass** der Wischwaschvorgang bei einer Änderung mindestens eines elektrischen Antriebsparameters der Förderpumpe abschaltbar ist.

2. Scheibenwaschanlage nach Anspruch 1, **dadurch gekennzeichnet, dass** die Steuereinrichtung eine Leistungsaufnahme der Förderpumpe überwacht und den Wischwaschvorgang bei einer einem Leerlauf entsprechenden Leistungsaufnahme beendet.

3. Scheibenwaschanlage nach Anspruch 1 oder 2, **dadurch gekennzeichnet, dass** die Steuereinrichtung den Wischwaschvorgang bei einem leeren Vorratsbehälter unterdrückt oder abbricht.

4. Scheibenwaschanlage nach einem der Ansprüche 1 bis 3, **dadurch gekennzeichnet, dass** die Steuereinrichtung mit einem Feuchtigkeit- und/oder Schmutzsensor gekoppelt ist, dessen Sensorsignal den Wischwaschvorgang selbsttätig auslöst.

5. Scheibenwaschanlage nach einem der Ansprüche 1 bis 4, **dadurch gekennzeichnet, dass** die Steuereinrichtung ein Abschalten der Förderpumpe und/oder ein Beenden und/oder Unterdrücken des Wischwaschvorgangs optisch und/oder akustisch zur Anzeige bringt.

6. Scheibenwaschanlage nach einem der Ansprüche 1 bis 5, **dadurch gekennzeichnet, dass** die Steuereinrichtung den Wischwaschvorgang entsprechend einer geförderten Menge an Waschflüssigkeit ausführt.

7. Scheibenwaschanlage nach einem der Ansprüche 1 bis 6, **dadurch gekennzeichnet, dass** eine bloße Wischfunktion auf eine Anforderung eines Nutzers hin ausführbar ist, insbesondere ein einmaliges Hin- und Herbewegen.

8. Scheibenwaschanlage nach einem der Ansprüche 1 bis 7, **dadurch gekennzeichnet, dass** bei einer auch teilweisen Verstopfung und/oder Vereisung von Leitungen und/oder Düsen der Waschflüssigkeit der Wischwaschvorgang abschaltbar ist.

## Claims

1. A windscreen washer system in a motor vehicle, comprising a storage container for a washing fluid, a feed pump, a motively driveable windscreen wiper and a control device, with a windscreen wiping and washing process being performable via an operator control element, **characterized in that** the windscreen wiping and washing process can be switched off in the case of a change of at least one electric drive parameter of the feed pump.

2. A windscreen washer system according to claim 1, **characterized in that** the control device monitors a power consumption of the feed pump and terminates the windscreen wiping and washing process at a power consumption corresponding to idling.

3. A windscreen washer system according to claim 1 or 2, **characterized in that** the control device suppresses or terminates the windscreen wiping and washing process in case of an empty storage container.

4. A windscreen washer system according to one of the claims 1 to 3, **characterized in that** the control device is coupled with a humidity and/or dirt sensor whose sensor signal will automatically initiate the windscreen wiping and washing process.

5. A windscreen washer system according to one of the claims 1 to 4, **characterized in that** the control device displays optically and/or acoustically any cut-off of the feed pump and/or termination and/or suppression of the windscreen wiping and washing process.

6. A windscreen washer system according to one of the claims 1 to 5, **characterized in that** the control device performs the windscreen wiping and washing process according to a conveyed quantity of wash fluid.

7. A windscreen washer system according to one of the claims 1 to 6, **characterized in that** a mere wiping function can be performed upon request of a user, especially a single wiping back and forth.

8. A windscreen washer system according to one of the claims 1 to 7, **characterized in that** the windscreen wiping and washing process can be switched off in case of an even partial blockage and/or icing of lines and/or nozzles of the wash fluid.

## Revendications

1. Installation de lave-glace dans un véhicule à moteur avec un réservoir pour un liquide de lavage, une pompe de transport, un essuie-glace pouvant être entraîné par un moteur et un dispositif de commande, dans laquelle un élément de commande permet d'exécuter une opération de lavage par essuyage, **caractérisée en ce que** l'opération de lavage par essuyage peut être arrêtée en cas de changement d'au moins un paramètre d'entraînement électrique de la pompe de transport.

2. Installation de lave-glace selon la revendication 1, **caractérisée en ce que** le dispositif de commande surveille la puissance absorbée par la pompe de transport et arrête l'opération de lavage par essuyage si la puissance absorbée correspond à une marche à vide.

3. Installation de lave-glace selon la revendication 1 ou 2, **caractérisée en ce que** le dispositif de commande inhibe ou interrompt l'opération de lavage par essuyage si le réservoir est vide.

4. Installation de lave-glace selon l'une des revendications 1 à 3, **caractérisée en ce que** le dispositif de commande est couplé à un capteur d'humidité et/ou d'encrassement dont le signal de capteur déclenche automatiquement l'opération de lavage par essuyage.

5. Installation de lave-glace selon l'une des revendications 1 à 4, **caractérisée en ce que** le dispositif de commande signale par un moyen visuel et/ou sonore l'arrêt de la pompe de transport et/ou l'arrêt et/ou l'inhibition de l'opération de lavage par essuyage.

6. Installation de lave-glace selon l'une des revendications 1 à 5, **caractérisée en ce que** le dispositif de commande exécute l'opération de lavage par essuyage en fonction d'une quantité transportée de liquide de lavage.

7. Installation de lave-glace selon l'une des revendications 1 à 6, **caractérisée en ce qu'**une simple fonction d'essuyage peut être exécutée à la demande d'un utilisateur, en particulier un mouvement de va-et-vient unique.

8. Installation de lave-glace selon l'une des revendications 1 à 7, **caractérisée en ce que** l'opération de lavage par essuyage peut être arrêtée en cas d'obturation même partielle et/ou de givrage de conduites et/ou de buses de liquide de lavage.
